# EUROPÄISCHE PATENTANMELDUNG

(11) **EP 4 445 996 A1**
(43) Veröffentlichungstag der Anmeldung: **16.10.2024**
(21) Anmeldenummer: 24164736.1
(22) Anmeldetag: 20.03.2024
(51) Int. Cl.: B01F 23/60, B01J 2/16, B01J 2/18, B01F 31/40, B01J 8/18, B01J 8/40

(54) **VORRICHTUNG ZUR FLUIDISIERUNG VON PARTIKELSCHÜTTUNGEN UND VERFAHREN ZUM BETREIBEN DERSELBEN**

(30) Priorität: 30.03.2023 DE 102023108230
(71) Anmelder: Rösler Holding GmbH, 96231 Bad Staffelstein (DE)
(72) Erfinder: MERKEL, Till, 89231 Neu-Ulm (DE); BECK, Moritz, 96231 Bad Staffelstein (DE); SIMON, Paul, 97653 Bischofsheim (DE); ENDER, Christian, 96269 Großheirath/Rossach (DE); BRAUNROTH, Domenik, 96450 Coburg (DE)
(74) Vertreter: Manitz Finsterwald Patent- und Rechtsanwaltspartnerschaft mbB

(57) **Zusammenfassung**

Eine Vorrichtung zur Fluidisierung von als Partikelschüttung vorliegenden Partikeln und optional in der Partikelschüttung enthaltenen Objekten umfasst mindestens einen vertikal beweglich gelagerten Behälter, der einen Bearbeitungsraum zur Aufnahme der Partikelschüttung definiert, einen Schwingungserzeuger, durch den der Behälter im Betrieb in eine vertikale Schwingung versetzbar ist, und eine Steuereinheit zur Einstellung der Frequenz und/oder Amplitude der vertikalen Schwingung.

## Beschreibung

Die Erfindung betrifft eine Vorrichtung zur Fluidisierung von als Partikelschüttung vorliegenden Partikeln und ein Verfahren zum Betreiben der Vorrichtung.

Im chemischen Apparatebau werden Fluid-durchströmte Festbetten für granulare mittel- bis feindisperse Feststoffe eingesetzt. Dazu wird eine lose Schüttung mit einem Fluid, zum Beispiel einem Gas durchströmt. Die Schüttung liegt abhängig von der Durchströmungsgeschwindigkeit des Fluids als Festbett, als homogenes oder als inhomogenes Wirbelbett vor. Eine Erhöhung der Gasgeschwindigkeit erzeugt eine sogenannte stoßende Wirbelschicht ("slugging"), geht dann in eine turbulente Wirbelschicht über, und schließlich werden die Partikel durch den Fluidstrom ausgetragen (pneumatische Förderung). Eine hohe Durchmischung der Partikel und des Fluids gelingt aber nur bei hohem Gasdurchsatz. Insbesondere bei feindispersen Partikeln (Pulvern) werden bereits bei niedrigen Strömungsgeschwindigkeiten Stäube ausgetragen, die nachgelagert aus dem Gasstrom entfernt werden müssen (z.B. durch Zyklone oder Filter). Außerdem sind diese Verfahren nicht geeignet, um größere Agglomerate oder Objekte, die in die Schüttung eingebettet sind, schonend zu behandeln. Vielmehr würden sich derartige Schüttungen entmischen, oder die eingebetteten Objekte würden mit der Apparatewand oder miteinander kollidieren und gegebenenfalls beschädigt werden.

Für die Bearbeitung der Oberflächen von Bauteilen aus Metall, Kunststoff, Keramik oder auch Holz kommen sogenannte Gleitschlifftechniken zum Einsatz. Dazu werden die Bauteile in bewegte Schüttungen von Schleifkörpern (zum Beispiel keramischen Körpern oder auch Kunststoffkörpern mit Größen zwischen 1 mm und 100 mm in verschiedenen Geometrien) eingebettet. Die Schüttungen werden durch Vibrationen in eine Walzenbewegung gebracht, sodass die Schleifkörper die Oberflächen der eingebetteten Objekte bearbeiten. Die Schüttung der Schleifkörper werden bei diesen Verfahren nicht durch Fluide in Bewegung gesetzt oder durchströmt. In Analogie zu den Wirbelschichtsystemen befinden sich diese bewegten Schüttungen im Zustand einer homogenen Schüttung. Die Bearbeitung von Bauteilen durch die Walzen einer bewegten Schüttung gelingt ausschließlich im Zustand einer homogenen Schüttung. Im Unterschied zu den WirbelschichtSystemen bringt eine Erhöhung der Energiezufuhr (etwa durch Vibration oder Rotation) - vergleichbar zur Erhöhung der Gasgeschwindigkeit im Wirbelschichtreaktor - keine Erhöhung der Durchmischung, sondern führt vielmehr zum Zusammenbrechen der Bearbeitungswalze. In derartigen Systemen ist also keine Mobilisierung der Schüttung für das Bearbeiten eingebetteter Objekte bekannt, die vergleichbar mit den Zuständen ist, die in einem Wirbelbett erzeugt werden können. Außerdem müssen in der Gleitschlifftechnik die Arbeitsbehälter, die Schleifkörper und die Bauteile in Bewegung gesetzt werden. Die hohe Trägheit der Massen führt dabei zwar zu stabilen Bedingungen in der Bearbeitung, allerdings können die Anregungsfrequenzen nicht dynamisch variiert werden.

Damit kommen beide Technologien nicht für die Bearbeitung eingebetteter größerer Objekte in Partikelschüttungen infrage und können aus diesem Grund auch nicht zur Bearbeitung von Objekten eingesetzt werden, wie sie zum Beispiel durch pulverbettbasierten 3-D-Druck hergestellt werden. Derartige Systeme werden heute typischerweise in Apparaturen gehandhabt, in denen die festen oder losen Pulverbetten mit den darin eingebetteten Objekten mit Druckluft und/oder Vibration beaufschlagt werden. Dabei lockern sich die Pulverpartikel in der Schüttung, werden mobilisiert und durch eingeblasene Fluide (zum Beispiel Druckluft) aufgewirbelt, über Unterdrucksysteme abgesaugt oder über Öffnungen in der Anlage entnommen oder abgeführt. Die austretenden Gasvolumenströme enthalten fein- oder feinstdisperse Partikel, was bei einigen Werkstoffen (Kunststoff, Titan, Magnesium) gegebenenfalls zu zündfähigen Gemischen führt. Feinstdisperse Partikel können lungengängig und damit gesundheitsschädlich sein. Vibrationen und hohe Druckluftströme können eingebettete Objekte außerdem in intensive Wechselwirkung mit Wandungen und anderen Objekten bringen und diese so beschädigen.

Eine der Erfindung zugrunde liegende Aufgabe besteht also darin, eine schonendere Fluidisierung fester oder loser Partikelschüttungen zu realisieren, ohne Partikel und Gase auszutragen und gegebenenfalls eingebettete Objekte zu beschädigen.

Die Lösung dieser Aufgabe erfolgt durch eine Vorrichtung mit den Merkmalen des Anspruchs 1.

Die erfindungsgemäße Vorrichtung umfasst mindestens einen vertikal beweglichen Behälter, der einen Bearbeitungsraum zur Aufnahme einer Partikelschüttung definiert. Weiterhin umfasst die Vorrichtung einen Schwingungserzeuger, auch Vibrationserzeuger oder Oszillator genannt, durch den der Behälter im Betrieb in eine vertikale Schwingung versetzbar ist, sowie eine Steuereinheit zur Einstellung der Frequenz und/oder Amplitude der vertikalen Schwingung. Die Vorrichtung ermöglicht eine Fluidisierung von Schüttungen ohne Austrag von Partikeln oder Gasen, weil sich überraschenderweise herausgestellt hat, dass durch eine vertikale Schwingung auch dann ein Wirbelbett erzeugt werden kann, wenn nur eine geringe Menge eines Fluids oder sogar überhaupt kein Fluid durch den Behälter strömt. Dies führt sowohl zu einer Verbesserung der Arbeitssicherheit als auch zu einer sehr guten Durchmischung der Pulverpartikel untereinander und zu einer schonenderen Abtrennung von im Pulver eingebetteten Objekten, die somit weniger Gefahr laufen, beschädigt zu werden. Somit eignet sich die Erfindung nicht nur zum Entpulvern von Objekten, beispielsweise zum Trennen eines mittels eines Pulverbett-basierten 3D-Druckverfahrens additiv gefertigten Objekts von überschüssigem Pulverbettmaterial, sondern auch für ein reines Pulverhandling, wie zum Beispiel das Mischen, Desagglomerieren oder Fördern von Pulvern.

Die Fluidisierung hängt von dem Material, der Füllhöhe bzw. dem daraus resultierenden Flächengewicht (üblicherweise in g/cm² angegeben), der Partikelgröße, der Packungsdichte sowie der Amplitude und Frequenz der Schwingung ab. Bei einem gegebenen Material mit gegebener Partikelgröße und Packungsdichte ermöglicht es die erfindungsgemäße Vorrichtung daher, durch die Einstellung einer geeigneten Frequenz, Amplitude und/oder Füllhöhe eine gewünschte Fluidisierung der Schüttung zu erreichen und den Zustand des erzeugten Wirbelbetts zu steuern.

In diesem Kontext bezeichnet der Begriff "Partikel" Teilchen eines Materials, das keinen festen Körper mit definierter geometrischer Form bildet, insbesondere mit einem mittleren Durchmesser im Mikrometerbereich (1-2000 µm, bevorzugt 1-1000 µm, bevorzugter 20-600 µm), die beispielsweise als annähernd kugelförmige oder unregelmäßig geformte Körner vorliegen können, während der Begriff "Objekte" makroskopische Teile mit einer geometrisch definierten Form bezeichnet, die aus einer vorangegangenen Urformung resultieren kann, und die insbesondere eine Größe im Millimeter- oder Zentimeterbereich (>1000 µm, bevorzugt >2000 µm, bevorzugter >5000 µm) aufweisen.

Vorteilhafte Ausführungsformen der Erfindung sind in der Beschreibung, der Zeichnung sowie den Unteransprüchen beschrieben.

Bei dem Schwingungserzeuger kann es sich beispielsweise um einen Vibrationsmotor, Magnetvibrator, Kolbenvibrator, Kugelvibrator, Rollenvibrator, Turbinenvibrator oder Körperschallerzeuger handeln. Der Schwingungserzeuger kann unterhalb oder seitlich des Behälters angeordnet sein. Es können auch mehrere Schwingungserzeuger unterhalb und/oder seitlich des Behälters angeordnet sein.

Die vertikale Schwingung ist in der vorliegenden Erfindung nicht auf eine Schwingung beschränkt, die im Wesentlichen in Schwerkraftrichtung, also senkrecht zu einer Horizontalen, erfolgt, obwohl eine derart ausgebildete Vorrichtung eine vorteilhafte Ausführungsform der vorliegenden Erfindung darstellt. Dieser Begriff kann in der vorliegenden Anmeldung auch eine Schwingung bezeichnen, die lediglich eine vertikale Komponente aufweist, also in einer Richtung geneigt zur Horizontalebene erfolgt.

Der Behälter kann auf einer Grundplatte angebracht sein. Dabei ist es vorteilhaft, wenn der Behälter und die Grundplatte flexibel miteinander verbunden sind (z.B. über Federn), weil in diesem Fall nur der Behälter selbst in Schwingung versetzt werden muss, während die Grundplatte nicht bewegt werden muss. Die Grundplatte kann in einer horizontalen Lage fixiert sein. Die Grundplatte kann jedoch auch neigbar ausgebildet sein. So kann beispielsweise eine zur Horizontalen geneigte Schwingungsrichtung realisiert werden.

Bevorzugt weist der Behälter eine, insbesondere zumindest teilweise verschließbare, erste Öffnung zum Einbringen der Partikelschüttung und optional darin enthaltenen Objekten in den Bearbeitungsraum auf. Wird die erste Öffnung nicht vollständig und gasdicht verschlossen, so bleibt ein Gasaustausch mit der Umgebung möglich. Falls ein Deckel zum Verschließen der ersten Öffnung vorgesehen ist, kann der Deckel teilweise verschließbar ausgebildet sein, z.B. durch im Deckel vorgesehene Segmente oder eine im Deckel angeordnete variable Öffnung. Durch die Einstellung des Schließzustands kann ein Gegendruck in dem Bearbeitungsraum aufgebaut und/oder gesteuert und somit die Dynamik der fluidisierten Partikelschüttung beeinflusst werden. Insbesondere kann der Schließzustand des Deckels durch die Steuereinheit gesteuert werden. Zum Beispiel kann der Deckel eine variable Öffnung aufweisen, deren Öffnungsgrad durch die Steuereinheit eingestellt werden kann.

Zusätzlich kann der Behälter eine, insbesondere verschließbare, zweite Öffnung zur Entnahme von Material aus dem Bearbeitungsraum aufweisen. Beispielsweise kann die erste Öffnung in einem oberen Bereich und die zweite Öffnung in einem unteren Bereich des Behälters angeordnet sein. Zudem kann eine Siebeinheit im Bereich der zweiten Öffnung vorgesehen sein, mittels welcher das über die zweite Öffnung aus dem Behälter entnommene Material gesiebt wird. Des Weiteren kann eine Waage vorgesehen sein, mittels der entnommenes, gesiebtes Material gewogen werden kann. Gemäß einer Ausführungsform umfasst die Vorrichtung eine Pulvermischeinheit, die insbesondere unterhalb des Behälters oder, falls eine Siebeinheit vorgesehen ist, unterhalb der Siebeinheit angeordnet ist. Die Siebeinheit, die Waage und/oder die Pulvermischeinheit ermöglichen eine Aufbereitung und Wiederverwendung des abgetrennten Pulvers und gegebenenfalls dessen Vermischung mit einem weiteren Pulver unmittelbar nach dem Ende des Prozesses.

Alternativ oder zusätzlich kann die Vermischung mehrerer Pulver in einer separaten Mischeinheit erfolgen, die als erfindungsgemäße Vorrichtung ausgebildet ist, um über die Fluidisierung eine Vermischung zu erreichen und dabei von den genannten Vorteilen der Erfindung zu profitieren.

Bevorzugt umfasst die Vorrichtung auch eine mit dem Behälter verbundene Absaugeinheit. Grundsätzlich ermöglicht es die erfindungsgemäße Vorrichtung, eine Fluidisierung der Partikelschüttung durch Schwingungen des Behälters auch ohne strömendes Fluid zu erreichen. Nichtsdestotrotz kann es vorteilhaft sein, wenn eine Absaugeinheit vorgesehen ist. Hierdurch lässt sich insbesondere die Arbeitssicherheit erhöhen, da ein unerwünschter Austrag von Gasen oder Partikeln aus dem Behälter durch die Absaugeinheit unwahrscheinlicher wird. Die Absaugeinheit kann oberhalb, unterhalb oder seitlich des Behälters angebracht sein.

Gemäß einer weiteren Ausführungsform ist eine mit dem Behälter verbundene Fluidzuführung, insbesondere zur Zufuhr von Gas, vorgesehen. Obwohl, wie erwähnt, erfindungsgemäß eine Fluidisierung der Partikelschüttung durch Schwingungen des Behälters erreicht wird, kann es dennoch von Vorteil sein, zusätzlich ein Fluid einzuleiten. So kann eine Verbesserung des Fluidisierungsprozesses erreicht werden, wenn der Behälter von einer geringen Menge von Fluid, insbesondere von Gas, wie z.B. Luft, durchströmt wird, die für sich genommen, d.h. ohne Schwingung des Behälters, nicht für eine Fluidisierung, d.h. ein Überschreiten des Lockerungspunktes, der Partikelschüttung ausreichen würde. Mit anderen Worten kann der Fluidvolumenstrom so eingestellt werden, dass sich die Partikelschüttung ohne Schwingung des Behälters noch nicht lockert. Anhand einschlägig bekannter Gleichungen aus Lehrbüchern der chemischen Verfahrenstechnik, z.B. mittels der Ergun-Gleichung, kann ein geeigneter Fluidvolumenstrom anhand der Parameter zur Charakterisierung der Partikelschüttung, wie z.B. Partikeldurchmesser, Feststoffdichte, Porosität der Schüttung, Durchmesser, Schütthöhe, und der Fluidströmung, wie z.B. Dichte, Viskosität, Fluidgeschwindigkeit, berechnet werden. Die Fluidzuführung kann oberhalb, unterhalb oder seitlich des Behälters angebracht sein.

Zusätzlich zu oder anstelle der Fluidzuführung zur Zufuhr eines Fluids zur Unterstützung der Fluidisierung, wie z.B. Druckluft, können auch Mittel zur Einleitung eines Schutzgases, wie z.B. Stickstoff oder Argon, in den Behälter bzw. den Bearbeitungsraum vorgesehen sein. Dies erlaubt die Durchführung der Fluidisierung unter einer Inertgasatmosphäre, was z.B. bei der Behandlung von Partikelschüttungen mit oxidationsempfindlichen Materialien vorteilhaft ist. Gemäß einer weiteren vorteilhaften Ausführungsform kann eine Unterdruckquelle mit dem Behälter verbunden sein. Dies erlaubt es, den Bearbeitungsraum zu evakuieren, bevor er mit Schutzgas befüllt wird, so dass unter einer Atmosphäre gearbeitet werden kann, die besonders wenig Sauerstoff und sonstige störende Stoffe, wie z.B. Wasserdampf, enthält.

Bevorzugt ist mindestens eine Wand des Behälters verschiebbar, so dass das Volumen des Bearbeitungsraums veränderbar ist. Es ist ferner bevorzugt, dass der Boden des Behälters neigbar und/oder in vertikaler Richtung verschiebbar ist. Außerdem ist es bevorzugt, wenn der Behälter so ausgebildet ist, dass der Bearbeitungsraum gekippt oder geneigt werden kann. Diese Merkmale bewirken, dass der Bearbeitungsraum den Bearbeitungsparametern angepasst werden kann, zum Beispiel im Hinblick auf die notwendige Füllstandshöhe.

Gemäß einer Ausführungsform ist der Bearbeitungsraum beheizbar und/oder kühlbar ausgebildet. Somit kann die Prozesstemperatur optimiert werden, zum Beispiel im Hinblick auf das zu bearbeitende Pulvermaterial.

Es ist bevorzugt, wenn die Vorrichtung eine Kamera und/oder einen Sensor zur Überwachung des Bearbeitungsraums umfasst. Die Kamera bzw. der Sensor kann Prozessänderungen wahrnehmen. Mittels der Kamera bzw. des Sensors kann beispielsweise der Füllstand des Behälters überwacht werden. Eine Kamera ist besonders vorteilhaft, da diese den Fluidisierungsprozess zum Beispiel aufzeichnen oder in Echtzeit auf einem Monitor wiedergeben kann.

Grundsätzlich kann die Steuereinheit nicht nur zur Einstellung der Frequenz und/oder Amplitude der vertikalen Schwingung, sondern auch zur Datenerfassung geeignet sein. Falls die Vorrichtung eine Kamera und/oder einen Sensor aufweist, kann die Steuereinheit mit der Kamera bzw. dem Sensor verbunden sein und so Prozessänderungen detektieren. Des Weiteren kann sich die Steuereinheit in der Kamera befinden, sofern eine solche vorhanden ist. Ferner kann die Steuereinheit dazu ausgebildet sein, Prozessanpassungen vorzunehmen, beispielsweise durch eine Änderung der Frequenz, der Amplitude und/ oder der Höhe eines Gegendrucks in dem Bearbeitungsraum, letzteres beispielsweise durch die Anpassung einer variablen Deckelöffnung. Die Steuereinheit kann somit eine automatische Prozessanpassung auf der Grundlage von Daten durchführen, die von der Kamera und/oder dem Sensor erfasst und an die Steuereinheit weitergeleitet werden. Bevorzugt umfasst die Vorrichtung außerdem einen mit der Steuereinheit verbundenen nichtflüchtigen Datenspeicher, der eine interne Parameterdatenbank enthält, in der Prozessparameter hinterlegt sind, so dass die Steuereinheit auf alle Prozessparameter in der Datenbank zugreifen kann.

Gemäß einer Ausführungsform umfasst die Vorrichtung mindestens einen Transportschacht zur Überführung der Partikelschüttung und optional darin eingebetteter Objekte in den Bearbeitungsraum und/oder zur Ausgabe von im Bearbeitungsraum entpulverten Objekten in eine Objektausgabe. In dem Transportschacht können Abblasdüsen zur zusätzlichen Entpulverung von zu befördernden Objekten, z.B. mittels Druckluft, vorgesehen sein. Es können auch zwei verschiedene Transportschächte vorgesehen sein, von denen einer zur Überführung der Partikelschüttung und ggf. der darin befindlichen Objekte und ein anderer zur Ausgabe von entpulverten Objekten in eine Objektausgabe vorgesehen ist.

Weiterer Gegenstand der Erfindung ist ein Verfahren zum Betreiben der erfindungsgemäßen Vorrichtung, wobei die als Partikelschüttung vorliegenden Partikel und optional darin eingebettete Objekte durch Fluidisierung in ein Wirbelbett überführt werden und eine hierfür erforderliche Energie zumindest teilweise über den Schwingungserzeuger eingebracht wird, indem der Schwingungserzeuger eine vertikale Schwingung des Behälters hervorruft, deren Frequenz und Amplitude mit Hilfe der Steuereinheit eingestellt wird.

Dabei ist es zur Verhinderung des Austrags von Partikeln oder Gasen sowie zur Vermeidung der Beschädigung gegebenenfalls in der Partikelschüttung enthaltener Objekte bevorzugt, dass die Fluidisierung der Partikelschüttung ausschließlich durch die Schwingung und nicht durch Einleitung eines Fluids in den Behälter hervorgerufen wird, gewissermaßen also fluidfrei erfolgt. Dennoch kann es gemäß einer anderen Ausführungsform auch vorteilhaft sein, die Fluidisierung durch zusätzliches Einleiten von Fluid, insbesondere von Gas, wie z.B. Luft, in den Behälter zu unterstützen. Dabei wird der Behälter jedoch bevorzugt nur von einer solchen Menge von Fluid durchströmt, die für sich genommen, d.h. ohne Schwingung des Behälters, nicht für eine Fluidisierung, d.h. ein Überschreiten des Lockerungspunktes, der Partikelschüttung ausreichen würde. Mit anderen Worten kann der Fluidvolumenstrom so eingestellt werden, dass sich die Partikelschüttung ohne Schwingung des Behälters noch nicht lockert. Anhand einschlägig bekannter Gleichungen aus Lehrbüchern der chemischen Verfahrenstechnik, z.B. mittels der Ergun-Gleichung, kann ein geeigneter Fluidvolumenstrom anhand der Parameter zur Charakterisierung der Partikelschüttung, wie z.B. Partikeldurchmesser, Feststoffdichte, Porosität der Schüttung, Durchmesser, Schütthöhe, und der Fluidströmung, wie z.B. Dichte, Viskosität, Fluidgeschwindigkeit, berechnet werden. Eine solche "sanfte" Fluidzufuhr kann gemäß einer Ausführungsform auch örtlich unterschiedlich hoch ausfallen, um verschiedene Bearbeitungszonen innerhalb eines Pulverbetts zu realisieren.

Die Fluidisierung kann durch Überführung der Partikelschüttung vom Festbett zum homogenen Wirbelbett, vom homogenen Wirbelbett zum inhomogenen Wirbelbett, vom inhomogenen Wirbelbett zum turbulenten Wirbelbett und/oder vom inhomogenen Wirbelbett zum stoßenden Wirbelbett oder in einer auf- oder absteigenden Abfolge dieser Wirbelbettzustände erfolgen. Bevorzugt ist dabei die Überführung der Partikelschüttung in ein stoßendes Wirbelbett.

An der Oberfläche etwaiger im Wirbelbett eingebetteter Objekte tritt eine Relativbewegung zwischen den Partikeln und den Objekten auf. Durch die Relativbewegung zwischen den Partikeln und den Objekten werden Anhaftungen von den Oberflächen entfernt und/oder die Oberflächeneigenschaften der Objekte verändert.

Gemäß einer Ausführungsform wird die Zusammensetzung der als Schüttung vorliegenden Partikel durch Entfernen oder Zuführen anderer Partikelarten verändert, um so die Wechselwirkung zwischen Partikeln und Objekten gezielt zu beeinflussen. Gemäß einer Ausführungsform kann es sich bei dem zusätzlichen Pulver um ein abrasives Medium handeln, was eine Oberflächenbearbeitung von in der Partikelschüttung enthaltenen Objekten ermöglicht.

Es kann während der Fluidisierung auch ein oder mehrere Pulver in den Behälter eingebracht werden, so dass eine Nachdosierung bzw. ein Pulvermischprozess stattfindet. Ein solcher Nachdosierungs- bzw. Pulvermischvorgang kann automatisch, d.h. von der Steuereinheit gesteuert, erfolgen. Der Nachdosierungs- bzw. Pulvermischvorgang erfolgt zum Beispiel, um verschiedene Pulversorten, wie z.B. "gebraucht" und "frisch", miteinander zu mischen, um die Pulvereigenschaften bezüglich Feuchtigkeit, Partikelgrößenverteilung, Farbe, Wirkkomponenten, Leitfähigkeit, Dichte, Agglomerat-Anteil oder anderer Eigenschaften anzupassen oder um die aggressive Wirkung einer Pulvermischung in einem nachgelagerten Prozessschritt zu modifizieren.

Die Frequenz der vertikalen Schwingung kann zwischen 2 Hz und 200 Hz, bevorzugt zwischen 2 Hz und 100 Hz, bevorzugter zwischen 10 Hz und 75 Hz liegen. Die Amplitude der vertikalen Schwingung kann zwischen 0,01 mm und 25 mm, bevorzugt zwischen 0,1 mm und 20 mm, bevorzugter zwischen 0,4 mm und 12 mm liegen. Gemäß einem Ausführungsbeispiel beträgt die Frequenz 50 Hz und die Amplitude 0,5 mm. Gemäß einem weiteren Ausführungsbeispiel beträgt die Frequenz 18 Hz und die Amplitude 10,5 mm. Es ist möglich, die Amplitude, die Frequenz oder beide Größen während der gesamten Dauer des Fluidisierungsprozesses konstant zu halten. Es kann jedoch vorteilhaft sein, eine oder beide dieser Größen im zeitlichen Verlauf des Prozesses zu variieren. So kann beispielsweise zu Beginn des Prozesses die Frequenz und/oder die Amplitude der Schwingung allmählich gesteigert werden, bis ein jeweiliger Maximalwert erreicht ist, der für einen bestimmten Zeitraum gehalten wird. Ebenso kann beispielsweise vor dem Ende des Prozesses die Frequenz und/oder die Amplitude allmählich abgesenkt werden, bis sie einen Wert von null erreicht. Auf diese Weise können abrupte Änderungen vermieden und nacheinander in kontrollierter Weise verschiedene Zustände im Wirbelbett (z.B. homogenes Wirbelbett, inhomogenes Wirbelbett usw.) realisiert werden.

Wenn in der Partikelschüttung Objekte enthalten sind, können diese durch das erfindungsgemäße Verfahren von Partikeln getrennt werden. Zum Beispiel können die in der Partikelschüttung enthaltenen Objekte von an ihrer Oberfläche anhaftenden Partikeln (z.B. Pulverresten) befreit werden. Eine derartige Entfernung von Anhaftungen wird in der vorliegenden Anmeldung auch als Entpulvern oder Entpulverung bezeichnet.

Sind in der Partikelschüttung mehrere Objekte mit unterschiedlichem Gewicht vorhanden, so können diese durch das erfindungsgemäße Verfahren in vertikaler Richtung nach Gewicht bzw. Dichte sortiert werden. Es ergibt sich also der Vorteil, dass als Ergebnis der Fluidisierung am Ende des Prozesses Objekte umso weiter oben in der Partikelschüttung zu finden sind, je kleiner und leichter sie sind, und umso weiter unten in der Partikelschüttung zu finden sind, je größer und schwerer sie sind.

Gemäß einer bevorzugten Ausführungsform werden die Amplitude und/oder die Frequenz der Schwingung so eingestellt, dass ein Teil oder alle der in der Partikelschüttung enthaltenen Objekte auf dem fluidisierten Partikelbett aufschwimmen. Der Behälter kann auch mit einem Medium gefüllt werden, das eine größere Dichte als die Objekte aufweist, um diese so durch Auftrieb an der Oberfläche zu halten. Wenn sich die Objekte an der Oberfläche der Partikelschüttung befinden, können sie auf besonders einfache Weise aus dem Behälter entnommen werden.

Gemäß einer besonders vorteilhaften Ausführungsform des erfindungsgemäßen Verfahrens handelt es sich bei den Objekten um additiv hergestellte Objekte aus einem Pulverbett-basierten 3D-Druck-Verfahren, und die Partikelschüttung umfasst einen Pulverkuchen aus überschüssigem Material des 3D-Druck-Verfahrens. Bei dem 3D-Druckverfahren kann es sich um ein beliebiges Pulverbett-basiertes Verfahren handeln, wie SLS (Selektives Lasersintern), MJF (Multi-Jet Fusion), SAF (Selective Absorption Fusing) oder Binderjetting.

Im Bereich des Pulverbett-basierten 3D-Drucks ergibt sich generell das Problem, dass das verwendete Pulverbett nicht vollständig zu additiv hergestellten Objekten verarbeitet wird, sondern die Objekte unmittelbar nach ihrer Erzeugung zunächst in einem Pulverkuchen aus Resten des Pulverbetts eingeschlossen sind. Aus diesem Pulverkuchen müssen die hergestellten Gegenstände befreit ("ausgepackt") werden. Es hat sich herausgestellt, dass die Vorrichtung und das Verfahren gemäß der vorliegenden Erfindung hervorragend geeignet sind, um durch ein solches Verfahren additiv hergestellte Objekte vom sie umgebenden Pulverkuchen zu trennen.

Es ist überdies ein verbreitetes Problem der Pulverbett-basierten 3D-Druckverfahren, dass die so hergestellten Objekte oft große Mengen an Pulveranhaftungen aufweisen (sogenannte "potatoes"). Bekannte Entpulverungsverfahren zur Entfernung der Anhaftungen, z.B. mittels Druckluft oder Vibration, weisen mehrere Nachteile auf: Filigrane und massive Teile können nicht zusammen entpulvert werden. Filigrane Teile sind zudem generell schlecht zu entpulvern und neigen dazu, beschädigt zu werden. Zudem fehlt es den bisher bekannten Entpulverungsverfahren an Reproduzierbarkeit. Sowohl das Entpulverungsergebnis als auch die auftretenden Beschädigungen der entpulverten Teile sind zufälliger Natur. Zum Beispiel ist die Entpulverung von Sacklöchern und Verschachtelungen nicht vorhersagbar und wiederholbar, und es wird auch an Stellen entpulvert, an denen keine Entpulverung gewünscht ist. Außerdem sind gesundheitsschädliche Pulver bei diesen Verfahren kaum handhabbar, und es ist kein Sortieren der Teile während des Prozesses möglich.

Demgegenüber weist die Entpulverung mittels der erfindungsgemäßen Fluidisierung durch Vibration eine Reihe von Vorteilen auf. Es kommt nicht zu Beschädigungen, filigrane und massive Teile können zusammen entpulvert werden, und auch filigrane Teile können ohne Probleme entpulvert werden. Die zu entpulvernden Teile können zudem im Prozess sortiert werden. Die Handhabung gesundheitsgefährdender Pulver wird stark verbessert. Die Entpulverung findet überwiegend an den Außenflächen der Teile statt und ist reproduzierbar. Der Entpulverungsgrad der Teile kann vor der Entpulverung bereits grob ermittelt werden und schwankt nach mehreren Versuchen um lediglich +/- 3%. Die Entpulverung mit der Vorrichtung bzw. nach dem Verfahren der vorliegenden Erfindung findet vorwiegend an den Außenflächen von Teilen statt. An den Außenflächen wird dabei generell und wiederholbar ein Entpulverungsgrad >95% erreicht. Pulver in Sacklöchern, Hohlräumen, Verschachtelungen oder feinen Gitterstrukturen wird hingegen nicht entfernt. Dies führt zwar bei der Rückgewinnung des überschüssigen Pulvers zu einem (geringen) Verlust an Material, ist aber trotzdem als Vorteil der vorliegenden Erfindung anzusehen, da auf diese Weise eine höhere Qualität des zurückgewonnenen Pulvers erreicht wird. Restliches Pulver, das sich z.B. zwischen feinen Gitterstrukturen befindet, hat nämlich während des additiven Fertigungsverfahrens bereits eine nicht unerhebliche thermische Belastung erfahren und soll daher nicht mehr genutzt werden.

Die in der 3D-Druckvorrichtung gebildete Gesamtheit aus den additiv hergestellten Objekten und dem sie umgebenden Pulverkuchen aus überschüssigem Material wird in diesem Kontext auch als Baujob bezeichnet. Gemäß einer Ausführungsform wird ein Baujob als Ganzes in den Bearbeitungsraum eingebracht. Der Baujob kann dabei direkt aus der 3D-Druckvorrichtung oder mittels einer Transportbox in die Vorrichtung der vorliegenden Erfindung überführt werden.

Wenn die Vorrichtung gemäß der vorliegenden Erfindung einen Transportschacht umfasst, kann der Pulverkuchen mit den additiv hergestellten Objekten bzw. der Baujob als Ganzes über den Transportschacht in den Bearbeitungsraum der Vorrichtung überführt werden.

Gemäß einer weiteren Ausführungsform handelt es sich bei den Objekten zwar ebenfalls um additiv hergestellte Objekte aus einem beliebigen Pulverbettbasierten 3D-Druckverfahren; die Objekte wurden jedoch bereits aus dem Pulverkuchen herausgelöst. Die Partikel der Partikelschüttung können dann im Wesentlichen nicht aus überschüssigem Pulverbettmaterial, sondern aus einem oder mehreren anderen fluidisierbaren Pulvern bestehen, die zum Beispiel zur Entpulverung oder Bearbeitung der Objektoberflächen geeignet sind. Beispielsweise kann ein additiv gefertigtes Teil aus PA12 (Poly(dodecano-12-lactam), einem Polyamid) zusammen mit einer Partikelschüttung aus Edelkorund-Pulver (Aluminiumoxid-Partikeln) in einer erfindungsgemäßen Vorrichtung platziert werden. Die PA12-Teile schwimmen aufgrund ihrer geringeren Dichte auf der Oberfläche der Wirbelschicht und werden durch den aufwirbelnden Edelkorund entpulvert (sogenannte "schwimmende Entpulverung"). Gemäß einem Ausführungsbeispiel wird ein Gemisch aus fluidisierbarem feinen Edelkorund (mittlere Partikelgröße 53-90 µm) mit einer geringen Menge an grobem Edelkorund (1400-2000 µm) verwendet. Die groben Edelkorund-Partikel werden ebenfalls nach oben befördert, dort aufgewirbelt und tragen so zu einer nochmals verbesserten Entpulverung der PA12-Teile bei.

Die oben erläuterten Prozesse zum Abtrennen und/oder Entpulvern von Objekten, insbesondere von additiv gefertigten Teilen, stellen zwar vorteilhafte Ausführungsformen dar; die vorliegende Erfindung ist jedoch keineswegs auf diese speziellen Anwendungen beschränkt. Weitere Anwendungsmöglichkeiten bestehen beispielsweise im Konditionieren, Homogenisieren, Mischen und Transportieren von Partikelschüttungen sowie in der gezielten Oberflächenbearbeitung von darin enthaltenen Objekten. Eine beispielhafte Anwendung der erfindungsgemäßen Fluidisierung ist eine Anreicherung eines Pulvers mit Gas (z.B. Luft), um z.B. seine Fließfähigkeit zu verändern.

Die vorliegende Erfindung kann in einem Batch-Betrieb genutzt werden, in welchem die Vorrichtung mit einer einzelnen Charge einer Partikelschüttung befüllt wird, dann eine Fluidisierung der Schüttung, ggf. in einer zeitlichen Abfolge verschiedener Wirbelbettzustände, erfolgt und nach Beendigung der Fluidisierung die Partikel einschließlich ggf. enthaltener Objekte aus der Vorrichtung entnommen werden.

Es ist jedoch ebenso möglich, dass die Vorrichtung als eine im kontinuierlichen oder Durchlaufbetrieb laufende Anlage genutzt wird. In diesem Fall ist es vorteilhaft, wenn die Vorrichtung mindestens zwei Transportschächte umfasst, so dass über einen ersten Schacht das zu fluidisierende Partikelmaterial zugeführt werden und über einen zweiten Schacht das behandelte Partikelmaterial die Vorrichtung verlassen kann.

Nachfolgend wird die vorliegende Erfindung rein beispielhaft anhand einer vorteilhaften Ausführungsform und unter Bezugnahme auf die beigefügte Zeichnung beschrieben. Es zeigt:

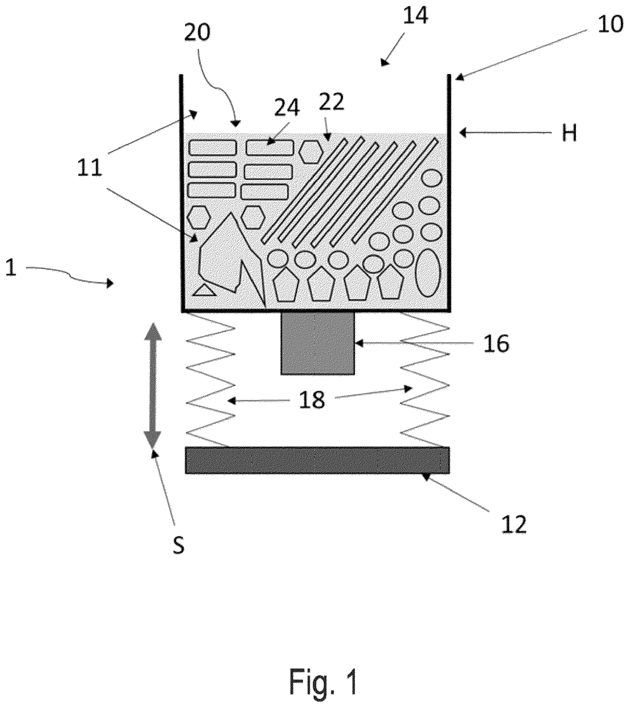

- Fig. 1: eine Schnittansicht einer erfindungsgemäßen Vorrichtung zur Fluidisierung von als Partikelschüttung vorliegenden Partikeln im befüllten Zustand.

Die in Fig. 1 dargestellte Vorrichtung 1 weist einen Behälter 10 und eine darunter angeordnete horizontale Grundplatte 12 auf. Der Behälter 10 ist in einer vertikalen Schwingungsrichtung S relativ zu der Grundplatte 12 beweglich gelagert. Konkret ist der Behälter 10 über Federn 18 vertikal flexibel mit der Grundplatte 12 verbunden. An einer Unterseite des Behälters 10 ist ein Schwingungserzeuger 16 angebracht, mit dessen Hilfe sich der Behälter 10 relativ zu der Grundplatte in vertikale Schwingung versetzen lässt. Der Schwingungserzeuger 16 ist mit einer nicht gezeigten Steuereinheit verbunden, durch die sich die Frequenz und/oder Amplitude der Schwingung einstellen lässt.

Des Weiteren definiert der Behälter 10 einen Bearbeitungsraum 11 zur Aufnahme einer Partikelschüttung 22. An seiner Oberseite weist der Behälter 10 eine Öffnung 14 auf, über welche der von dem Behälter 10 umschlossene Bearbeitungsraum 11 mit der Partikelschüttung 22 befüllt und entleert werden kann. Zum Verschließen der Öffnung 14 kann ein (nicht dargestellter) Deckel vorgesehen sein. Der Deckel kann auch nur teilweise geschlossen werden, z.B. mittels Segmenten oder einer variablen Deckelöffnung, um die Dynamik der fluidisierten Partikelschüttung durch den Aufbau und/oder die Steuerung eines Gegendrucks in dem Bearbeitungsraum 11 zu beeinflussen.

Im dargestellten Ausführungsbeispiel ist der Behälter 10 nicht nur mit einer Partikelschüttung 22, sondern auch mit zu bearbeitenden Objekten 24 befüllt, und zwar bis zu einer Füllhöhe H. Genauer gesagt handelt es sich bei der Füllung um einen vollständigen Baujob 20 oder um Teile eines vollständigen Baujobs 20, welcher zum Beispiel aus einem zuvor durchgeführten Pulverbett-basierten 3D-Druckverfahren resultiert und welcher aus einem Pulverkuchen 22, der aus überschüssigem Pulverbettmaterial gebildet ist, und verschiedenen darin befindlichen gedruckten Teilen 24 unterschiedlicher Größe besteht, wobei die kleinsten Teile 24 eine Länge bzw. einen Durchmesser von etwa 1 cm aufweisen. Der Pulverkuchen 22 wird aus Partikeln gebildet, die eine mittlere Partikelgröße zwischen 10 µm und 250 µm aufweisen.

Fig. 1 zeigt den Zustand vor dem Beginn der Fluidisierung, in dem noch keine vertikale Größensortierung der Teile 24 erfolgt ist. Die Vorrichtung 1 umfasst keine Mittel zum Einleiten eines Fluids, ist also eine Vorrichtung zur fluidfreien Fluidisierung einer Partikelschüttung. Sobald der Schwingungserzeuger 16 aktiviert wird, beginnt der Behälter 10, eine vertikale Schwingung in der Richtung S relativ zur Grundplatte 12 auszuführen. Mittels der dafür vorgesehenen Steuereinheit wird eine Frequenz und Amplitude der Schwingung eingestellt, die so hoch ist, dass sie zur Fluidisierung der Partikelschüttung 22 führt. Die Frequenz und/oder die Amplitude der Schwingung kann über die Steuereinheit sukzessive gesteigert werden, bis der gewünschte Zustand des Wirbelbetts, z.B. ein stoßendes Wirbelbett, erreicht ist. Während der Fluidisierung der Partikelschüttung kann bei der Einstellung geeigneter Parameter eine vertikale Sortierung der gedruckten Teile 24 nach Gewicht oder Dichte erfolgen, wobei die Teile 24 im gebildeten Wirbelbett umso weiter nach oben steigen, je leichter sie sind. Zugleich erfolgt aufgrund der Relativbewegung der fluidisierten Partikel und der gedruckten Teile 24 zueinander während der Fluidisierung eine Entpulverung der gedruckten Teile 24, die dabei an ihren Außenflächen von anhaftenden Pulverresten befreit werden. Hingegen werden in den gedruckten Teilen 24 vorhandene Sacklöcher, Hohlräume, Verschachtelungen und feine Gitterstrukturen nicht entpulvert. Nach erfolgter Grö-βensortierung und Entpulverung werden über die Steuereinheit die Frequenz und die Amplitude der Schwingung verringert, bis die vertikale Schwingung zum Erliegen kommt. Sobald sich der Behälter 10 wieder in Ruhe befindet, können die Partikelschüttung 22 einerseits und die sortierten und entpulverten Teile 24 andererseits daraus entnommen werden.

## Patentansprüche

1. Vorrichtung (1) zur Fluidisierung von als Partikelschüttung (22) vorliegenden Partikeln und optional in der Partikelschüttung (22) enthaltenen Objekten (24), umfassend:
mindestens einen vertikal beweglich gelagerten Behälter (10), der einen Bearbeitungsraum (11) zur Aufnahme der Partikelschüttung (22) definiert;
einen Schwingungserzeuger (16), durch den der Behälter (10) im Betrieb in eine vertikale Schwingung versetzbar ist; und
eine Steuereinheit zur Einstellung der Frequenz und/oder Amplitude der vertikalen Schwingung (S).

2. Vorrichtung (1) nach Anspruch 1,
wobei der der Behälter (10) eine, insbesondere zumindest teilweise verschließbare, erste Öffnung (14) zum Einbringen der Partikelschüttung (22) und optional darin enthaltenen Objekten (24) in den Bearbeitungsraum (11) aufweist und/oder wobei der Behälter (10) eine, insbesondere verschließbare, zweite Öffnung zur Entnahme von Material aus dem Bearbeitungsraum (11) aufweist.

3. Vorrichtung (1) nach Anspruch 2,
wobei eine Siebeinheit im Bereich der zweiten Öffnung und optional eine Waage für gesiebtes Material vorgesehen ist.

4. Vorrichtung (1) nach einem der vorstehenden Ansprüche,
wobei eine Pulvermischeinheit unterhalb des Behälters (10) angeordnet ist.

5. Vorrichtung nach einem der vorstehenden Ansprüche,
wobei eine mit dem Behälter (10) verbundene Absaugeinheit vorgesehen ist.

6. Vorrichtung (1) nach einem der vorstehenden Ansprüche,
wobei mindestens eine Wand des Behälters verschiebbar ist, so dass das Volumen und/oder die Bodenfläche des Bearbeitungsraums (11) veränderbar sind, und/oder wobei der Boden des Behälters (10) neigbar und/oder in vertikaler Richtung verschiebbar ist.

7. Vorrichtung (1) nach einem der vorstehenden Ansprüche,
wobei der Behälter (10) so ausgebildet ist, dass der Bearbeitungsraum (11) gekippt oder geneigt werden kann.

8. Vorrichtung (1) nach einem der vorstehenden Ansprüche,
wobei eine Kamera und/oder ein Sensor zur Überwachung des Bearbeitungsraums (11) vorgesehen ist.

9. Vorrichtung (1) nach einem der vorstehenden Ansprüche,
wobei ein nichtflüchtiger Datenspeicher, der eine interne Parameterdatenbank enthält, mit der Steuereinheit verbunden ist.

10. Verfahren zum Betreiben einer Vorrichtung (1) nach einem der vorstehenden Ansprüche, wobei die als Partikelschüttung (22) vorliegenden Partikel und optional darin eingebettete Objekte (24) durch Fluidisierung in ein Wirbelbett überführt werden und eine hierfür erforderliche Energie zumindest teilweise über den Schwingungserzeuger (16) eingebracht wird, indem der Schwingungserzeuger (16) eine vertikale Schwingung des Behälters (10) hervorruft, deren Frequenz und Amplitude mit Hilfe der Steuereinheit eingestellt wird, wobei optional die Fluidisierung der Partikelschüttung (22) ausschließlich durch die Schwingung und nicht durch Einleitung eines Fluids in den Behälter (10) hervorgerufen wird.

11. Verfahren nach Anspruch 10,
wobei die Fluidisierung durch Überführung der Partikelschüttung (22) vom Festbett zum homogenen Wirbelbett, vom homogenen Wirbelbett zum inhomogenen Wirbelbett, vom inhomogenen Wirbelbett zum turbulenten Wirbelbett und/oder vom inhomogenen Wirbelbett zum stoßenden Wirbelbett oder in einer auf- oder absteigenden Abfolge dieser Wirbelbettzustände erfolgt.

12. Verfahren nach einem der Ansprüche 10 oder 11,
wobei in der Partikelschüttung (22) enthaltene Objekte (24) in vertikaler Richtung nach Gewicht sortiert werden.

13. Verfahren nach einem der Ansprüche 10 bis 12,
wobei der Behälter (10) mit einem Medium gefüllt ist, das eine größere Dichte als die Objekte (24) aufweist.

14. Verfahren nach einem der Ansprüche 10 bis 13,
wobei die Zusammensetzung der Partikelschüttung (22) durch Entfernen oder Zuführen anderer Partikelarten verändert wird.

15. Verfahren nach einem der Ansprüche 10 bis 14,
wobei während der Fluidisierung zusätzliches Pulver in den Behälter (10) eingebracht wird.
